# EUROPÄISCHE PATENTSCHRIFT

(11) **EP 1 615 057 B1**
(45) Veröffentlichungstag und Bekanntmachung des Hinweises auf die Patenterteilung: **02.01.2008**
(21) Anmeldenummer: 05013292.7
(22) Anmeldetag: 21.06.2005
(51) Int. Cl.: G02B 6/44

(54) **Vorrichtung zum Verknüpfen zumindest eines Zweiglichtwellenleiters mit einem Hauptlichtwellenleiter**
Device for connecting at least one branching light guide to a main light guide
Dispositif pour connecter au moins un guide de lumière de dérivation à un guide de lumière principal

(30) Priorität: 08.07.2004 DE 102004033229
(43) Veröffentlichungstag der Anmeldung: 11.01.2006
(73) Patentinhaber: EWE Netz GmbH, 26133 Oldenburg (DE)
(72) Erfinder: Beier, Siegfried, 27798 Hude (DE); Harms, Reimo, 26802 Moormerland (DE); Wegener, Alfred, 47918 Tönisvorst (DE)
(74) Vertreter: Eisenführ, Günther

(56) Entgegenhaltungen:
- EP-A- 0 356 942
- EP-A- 1 122 571
- DE-A- 3 706 518
- DE-A1- 4 341 999
- DE-A1- 19 542 637
- GB-A- 2 286 060
- US-A- 5 375 185
- US-A1- 2004 123 998
- PATENT ABSTRACTS OF JAPAN Bd. 014, Nr. 111 (P-1014), 28. Februar 1990 (1990-02-28) -& JP 01 310305 A (TOKYO ELECTRIC POWER CO INC:THE; others: 01), 14. Dezember 1989 (1989-12-14)

## Beschreibung

Die Erfindung betrifft eine Vorrichtung zum Verknüpfen zumindest eines Zweiglichtwellenleiters mit einem Hauptlichtwellenleiter.

Zur Übertragung von Daten, insbesondere von digitalen Daten, werden neben metallischen Kabeln immer häufiger Lichtwellenleiter eingesetzt. Lichtwellenleiter können Daten verlustfrei übertragen und haben eine größere Übertragungsrate für Daten.

Als Stand der Technik sei allgemein hingewiesen auf DE 195 42 637 A1, welche eine Abzweigmuffe für Lichtwellenleiter-Kabel offenbart, sowie auf DE 43 41 999 A1, die ein Muffengehäuse zum Verbinden, Abzweigen und Aufteilen von Kabeln, insbesondere von Bündeladern und ihrer Glasfasern von Glasfaserkabeln beschreibt, und auf JP-A 01310305, die eine Vorrichtung zum Verbinden von Lichtwollenkabeln offenbart, ferner auf EP 1 122 571 A1, welche eine Vorrichtung zum Verbinden von verspleißten Lichtwellenleiter offenbart sowie US-A1 2004/0123998, welche eine Gehäuse zum Verbinden von Lichtwellenleiterkabeln beschreibt.

Für das Übertragen von Kommunikationsdaten werden immer häufiger Lichtwellenleiter eingesetzt. Problematisch ist dabei, die von einem Hauptlichtwellenleiter abzweigenden Zweiglichtwellenleiter mit dem Hauptlichtwellenleiter zu verbinden. Das Verknüpfen zweier Lichtwellenleiter kann dabei beispielsweise durch ein Verspleißen erfolgen, jedoch sind von dem Hauptlichtwellenleiter für das Herstellen der Verbindungen Vorratslängen zu bevorraten. Das Anordnen einer Vorratslänge im Verbindungsbereich mit dem Zweiglichtwellenleiter behindert die Versorgung zum Beispiel eines Gebäudes mit anderen Medien, wie Gas und Wasser, räumlich.

Bisher werden große Gebäude und Verbraucher, wie beispielsweise Unternehmen, über Lichtwellenleiter an Datennetze angeschlossen. Für diese großen Verbraucher ist es möglich, einen Hauptlichtwellenleiter bis in das Gebäude des Nutzers zu führen.

Der Erfindung liegt die Aufgabe zugrunde, eine Vorrichtung der eingangs genannten Gattung aufzuzeigen, mit der es ermöglicht ist, mehrere voneinander verschiedene und auch kleinere Verbraucher über Zweiglichtwellenleiten an ein und denselben Hauptlichtwellenleiter anzuschließen.

Die Aufgabe wird erfindungsgemäß mit einer Vorrichtung mit den Merkmalen nach Anspruch 1 gelöst Vorteilhafte Weiterbildungen sind in den Unteransprüchen beschrieben.

Für den Anschluß eines Zweigwellenlichtleiters an den Happtlichtwellenleiter ist ein Gehäuse vorgesehen. Der Anschlußbereich der beiden Lichtwellenleiter kann mit diesem Gehäuse unter der Erdoberfläche angeordnet sein, das Gehäuse schützt den Verbindungsbereich beider Lichtwellenleiter gegen äußere Einflüsse.

Innerhalb des Gehäuses wird eine aus dem Hauptlichtwellenleiter entnommene Faser vorzugsweise abgeschnitten. Der nach dem Abschnitt nachfolgende Längenbereich dieser Faser wird nicht mehr für das Übertragen von Lichtsignalen verwendet. Die abgeschnittene Faser wird nämlich mit einer Faser des Zweiglichtwellenleiters lichtwellenleitend verbunden, so daß die über den Hauptlichtwellenleiter zugeführten Lichtsignale im Bereich des Gehäuses auf den Zweiglichtwellenleiter umgeleitet werden und über diesen in ein Gebäude eingeführt werden können.

Die Verbindung von Hauptlichtwellenleiter und Zweiglichtwellenleiter ist kompakt in dem Gehäuse angeordnet. Von dem Hauptlichtwellenleiter sind keine Vorratslängen zu bevorraten, die in der Umgebung des Gehäuses abzulegen sind. Neben dem raumsparenden Effekt der insbesondere als Muffe ausgebildeten erfindungsgemäßen Vorrichtung ist diese kostenmindernd.

Der Hauptlichtwellenleiter verläuft zum Beispiel durch das Gehäuse hindurch. Nach einem ersten Gehäuse können an den Hauptlichtwellenleiter weitere Gehäuse angeschlossen sein, in denen jeweils ein Zweiglichtwellenleiter oder mehrere Zweiglichtwellenleiter mit dem Hauptlichtwellenleiter lichtwellenleitend verbunden sind.

So ist nach einer ersten Weiterbildung der Erfindung vorgesehen, daß der Hauptlichtwellenleiter ein Versorgungskabel mit mehreren Bündeladern ist, welche jeweils eine Vielzahl von Fasern aufweisen. Über die Vielzahl von Fasern können voneinander verschiedene Lichtsignale übertragen werden. Diese verschiedenen Signale können verschiedenen Gebäuden zugeordnet werden, so daß es möglich ist, über einen Hauptlichtwellenleiter zum Beispiel eine gesamte Wohnsiedlung anzuschließen und diese mit den nötigen Daten für Telefonie, Internet, Video on Demand zu versorgen und auch für das Ablesen von zum Beispiel Elektro- und Gaszählern den Hauptlichtwellenleiter zu verwenden. Auf die einzelnen Fasern wird jeweils in Gehäusen erfindungsgemäßer Vorrichtungen zugegriffen.

Der Hauptlichtwellenleiter weist vorzugsweise ein strangförmiges Zentralelement auf, um das die Bündeladem gewickelt sind, wobei die Schlagrichtung der Bündeladern auf dem Zentralelement in Wendepunkten periodisch wechselt. Die Wicklung der Bündeladern erfolgt nach dem Prinzip der SZ-Verseilung. Nach dieser Verseilung wechselt die Schlagrichtung der Bündeladern auf dem Zentralelement in periodischen Abständen. Entfernt man einen Mantel des Kabels symmetrisch zu einem Wendepunkt, so ist wenigstens eine Bündelader vom Zentralelement abwickelbar, ohne sie zu zerstören oder zu überdehnen. Allein durch das Abwickeln unter Berücksichtigung des Wendepunktes ist eine geringe Überlänge der Bündelader erhaltbar, welche die erforderliche Handlungsfreiheit beim Verbinden einer Faser dieser Bündelader mit wenigstens einer Faser des Zweiglichtwellenleiters bereitstellt.

Vorzugsweise ist daher das Gehäuse der erfindungsgemäßen Vorrichtung im Bereich eines Wendepunktes angeordnet, damit die Bündelader des Hauptlichtwellenleiters mit einer Überlänge zur Verfügung steht.

Nach einer nächsten Weiterbildung der Erfindung ist vorgesehen, daß das Gehäuse einen Bauraum zur Aufnahme einer Vorratslänge des Zweiglichtwellenleiters hat. Der Zweiglichtwellenleiter weist ganz regelmäßig einen geringeren Querschnitt als der Hauptlichtwellenleiter auf, da der Zweiglichtwellenleiter eine geringere Anzahl von Fasern hat. Diese Fasern können innerhalb des Gehäuses mit einer Vorratslänge aufgenommen werden, damit ein gewisser Vorrat an Zweiglichtwellenleitern für zukünftige Anschlußarbeiten zur Verfügung steht. Der Zweiglichtwellenleiter wird auf geeignete Weise innerhalb des Gehäuses stabilisiert, dazu können dem Bauraum Führungselemente zur Führung des Zweiglichtwellenleiters ohne Unterschreiten seines minimalen Biegeradius zugeordnet sein. Diese Führungselemente sind vorzugsweise durch Materialvorsprünge ausgebildet, die einstückig aus einer Wandung des Gehäuses vorstehen können.

Die zu verbindende Faser des Hauptlichtwellenleiters ist dagegen nach einer Weiterbildung der Erfindung ohne Vorhalten einer Vorratslänge zum Beispiel im Gehäuse zu einer Halteeinrichtung geführt. Zu der Halteeinrichtung wird dabei der vorzugsweise abgeschnittene Abschnitt der Faser ausgehend von der Versorgungsquelle des Hauptlichtwellenleiters geführt. Die Faser wird in der Halteeinrichtung aufgenommen und steht in dieser für die Verbindung mit einer Faser des Zweiglichtwellenleiters bereit. Die zugeordnete Faser des Zweiglichtwellenleiters ist dazu neben der Faser des Hauptlichtwellenleiters in der Halteeinrichtung aufnehmbar. Beide Fasern sind miteinander auf geeignete Weise lichtwellenleitend verbindbar, beispielsweise durch ein miteinander verspleißen.

Die Halteeinrichtung weist nach einer Weiterbildung der Erfindung mehrere Halteelemente zur Aufnahme der Fasern auf, wobei die Halteelemente zueinander in einer Reihe angeordnet sind, welche etwa parallel zum Verlauf des Hauptlichtwellenleiters ausgerichtet ist. Die voneinander verschiedenen Halteelemente können einerseits zum haltenden Aufnehmen mehrerer miteinander verbundener Faserpaare dienen. Andererseits ist aber auch ermöglicht, in voneinander verschiedenen Halteelementen eine und dieselbe Faser des Hauptlichtwellenleiters aufzunehmen, nach dem diese nach Verändern ihrer Verbindung mit der Faser eines Zweiglichtwellenleiters um den Verbindungsabschnitt beider Fasern gekürzt ist. Die Faser des Hauptlichtwellenleiters kann zunächst in einem von der Einlaufseite der Bündelader des Hauptlichtwellenleiters in das Gehäuse entfernten Halteelement gehalten sein. Ist sie bei einer Änderung ihrer Verbindung mit einer Faser des Zweiglichtwellenleiters abzukürzen, ist diese Faser trotz des Nichtvorhandenseins einer Vorratslänge weiterhin in der Halteeinrichtung aufnehmbar. Sie wird nun einem Halteelement in der Reihe zugeordnet, das dem Einlauf der Bündelader des Hauptlichtwellenleiters in das Gehäuse angenäherter ist als das zuvor verwendete Halteelement. Auf diese Weise ist die Faser des Hauptlichtwellenleiters mehrfach kürzbar, ohne daß bei Änderungen der Konfiguration nicht sogleich auf eine Reservefaser in dem Hauptlichtwellenleiter zurückzugreifen ist.

Jedes Halteelement ist beispielsweise als ein Materialabschnitt ausgebildet, in den eine Verbindung beider Fasern einfach klemmend eingesteckt werden kann.

Zur weiteren Ausbildung der Erfindung ist noch vorgesehen, daß das Gehäuse einen etwa spindelförmigen Horizontalschnitt aufweist, wobei dem oberen Rand der Seitenwände nach innen vorstehende Vorsprünge zugeordnet sind. Der Hauptlichtwellenleiter wird durch das spindelförmige Gehäuse entlang der Hauptachse der Spindel geführt. Der Zweiglichtwellenleiter kann in mehreren Bahnen entlang der Seitenwände der Spindelform folgend in dem Gehäuse angeordnet sein. Die an dem oberen Rand der Seitenwände nach innen vorstehenden Vorsprünge dienen dabei als Führungselemente für den Zweiglichtwellenleiter, sie verhindern, daß der Zweiglichtwellenleiter aus dem Gehäuse vorstehen kann. Das Gehäuse bleibt dabei bei einem Einsatz nicht offen, vorzugsweise ist es als einseitig offene und mit einem Deckel verschließbare Schale ausgebildet.

Ein Ausführungsbeispiel der Erfindung, aus dem sich weitere erfinderische Merkmale ergeben, ist in der Zeichnung dargestellt. Es zeigen:
- Fig. 1:: den Verlauf eines Hauptlichtwellenleiters entlang einer Straße in einer Gebäudesiedlung,
- Fig. 2:: einen Abschnitt des Hauptlichtwellenleiters nach Entfernen des Kabelmantels und
- Fig. 3.: eine Draufsicht der erfindungsgemäßen Vorrichtung zum Verknüpfen eines Zweiglicht- wellenleiters mit dem Hauptlichtwellenleiter.

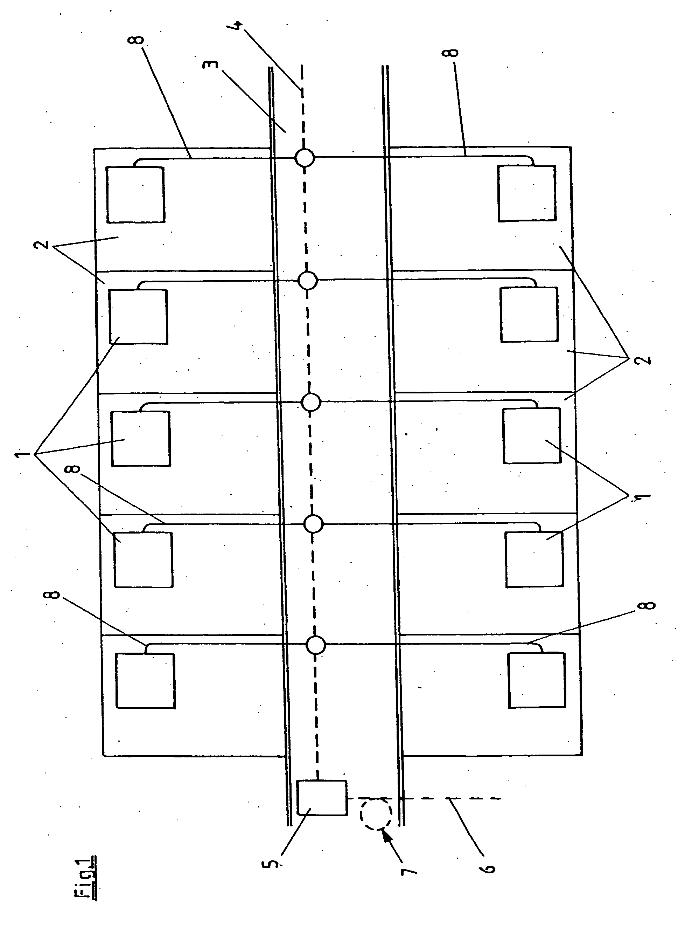

Die Wohnsiedlung in Figur 1 zeigt mehrere Gebäude 1, welche auf Grundstücken 2 angeordnet sind. Die Grundstücke 2 sind einer Straße 3 zugeordnet.

Im Verlauf der Straße 3 folgt ein Hauptlichtwellenleiter 4. Der Hauptlichtwellenleiter 4 wird aus einer Verteilerstation 5 herausgeführt, wobei die Lichtsignale in die Verteilerstation 5 über einen Basislichtwellenleiter 6 mit einer Vorratslänge 7 eingespeist werden.

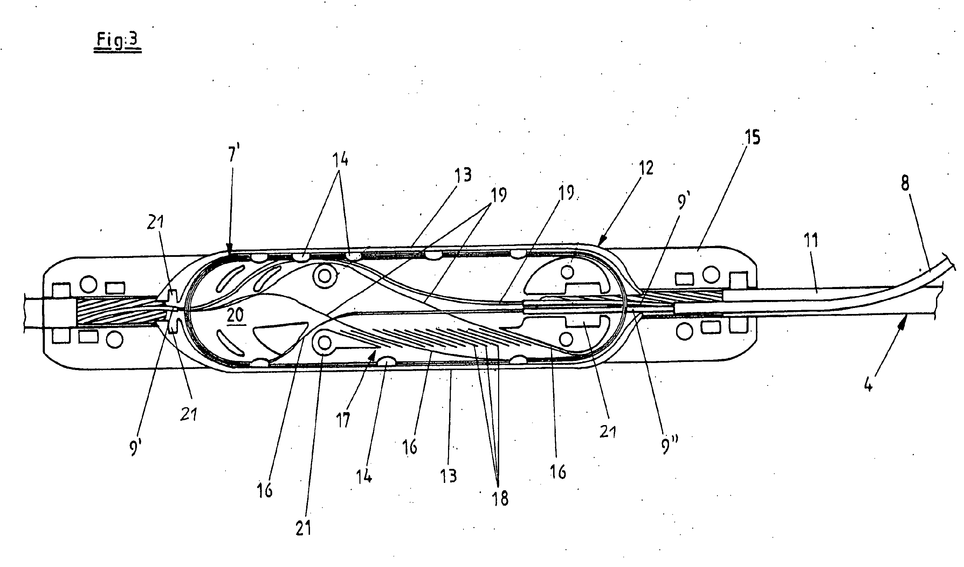

Zu den Gebäuden 1 verläuft jeweils ein Zweiglichtwellenleiter 8. Diese Zweiglichtwellenleiter 8 sind jeweils mit dem Hauptlichtwellenleiter 4 verknüpft. Die Verknüpfung erfolgt in als Muffen ausgebildeten erfindungsgemäßen Vorrichtungen, gezeigt in Figur 3.

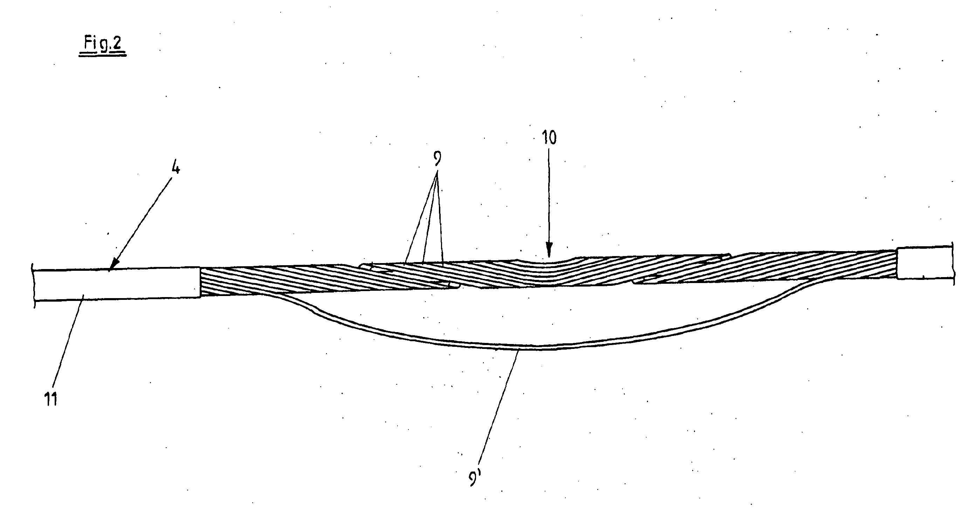

Figur 2 offenbart, daß der Hauptlichtwellenleiter 4 mehrere Bündeladem 9 hat, wobei die Bündeladem 9 um ein strangförmiges Zentralelement nach Art einer SZ-Verseilung gewickelt sind. Im Bereich eines Wendepunktes 10 wechselt die Schlagrichtung der Bündeladern 9. Wendepunkte 10 sind im Verlauf des Hauptlichtwellenleiters 4 regelmäßig angeordnet. Eine Bündelader 9' ist im Bereich des Wendepunktes 10 vom Hauptlichtwellenleiter 4 abgewickelt. Dadurch liegt diese Bündelader 9' mit einer Überlänge vor. Diese Überlänge wird zu dem Verbinden wenigstens einer Faser dieser Bündelader 9' mit einer Faser eines Zweiglichtwellenleiters 8 genutzt.

In Figur 3 ist die erfindungsgemäße Vorrichtung zum Herstellen dieser Verbindung gezeigt. Die Vorrichtung hat ein Gehäuse 12 mit Seitenwänden 13, von denen Vorsprünge 14 nach innen vorstehen. Teil des Gehäuses 12 ist dabei ein im Schnitt U-förmiger Träger 15. In diesen Träger 15, der beispielsweise aus Metall gefertigt ist, ist der Hauptwellenleiter 4 eingelegt.

In das Gehäuse 12 mündet der Zweiglichtwellenleiter 8 mit einem abisolierten Ende ein. Der Zweiglichtwellenleiter 8 hat eine Bündelader 9", in welcher mehrere Fasern 16 enthalten sind. Diese Fasern 16 sind in einer Vorratslänge 7' einige Mal entlang der Seitenwände 13 des Gehäuses 12 geführt. Schließlich werden die Enden zweier Fasern 16 zu einer Halteeinrichtung 17 mit mehreren Halteelementen 18 geführt. Im Bereich dieser Halteelemente 18 sind die beiden Fasern 16 mit zwei Fasern 19 aus der Bündelader 9' des Hauptlichtwellenleiters 4 verknüpft. Die Fasern 19 werden ohne Vorratslänge direkt zu den Halteelementen 18 geführt. Die Fasern 16,19 sind beispielsweise miteinander verspleißt. Nicht für eine Verbindung mit Fasern 16 benötigte Fasern 19 des Hauptlichtwellenleiters 4 werden mit der Bündelader 9' zurück in den Hauptlichtwellenleiter 4 geführt.

Nur die Bündelader 9, welche die für eine Verbindung benötigten Fasern 19 enthält, wird im Bereich der Halteeinrichtung 17 durch das Gehäuse 12 geführt. Alle anderen Bündeladern 9 werden unterhalb einer Trennebene 20 von dem Träger 15 des Gehäuses 12 aufgenommen. Im Bereich des Trägers 15 sind der Hauptlichtwellenleiter 4 und der Zweiglichtwellenleiter 8 mit geeigneten Schellen oder dergleichen fixierbar.

Der durch die Seitenwände 13 eingefaßte Bereich des Gehäuses 12 ist in Figur 3 offen dargestellt, er ist mit einem Deckel verschließbar. Zum Fixieren des Deckels dienen Aussparungen 21.

## Patentansprüche

1. Vorrichtung zum Verknüpfen zumindest eines Zweiglichtwellenleiters mit einem Hauptlichtwellenleiter,
wobei die Vorrichtung ein Gehäuse (12) aufweist, das dem Hauptlichtwellenleiter (4) zugeordnet ist und in welches der Zweiglichtwellenleiter (8) einmündet, und daß zumindest eine Faser (19) des Hauptlichtwellenleiters (4) innerhalb des Gehäuses (12) mit einer Faser (16) des Zweiglichtwellenleiters (8) lichtwellenleitend verbunden ist, **dadurch gekennzeichnet, daß** die zu verbindende Faser (19) des Hauptlicfltwellenleiters (4) ohne Vorhalten einer Vorratslänge zu einer Halteeinrichtung (17) geführt ist, daß die Halteeinrichtung (17) mehrere Halteelemente (18) zur Aufnahme der Fasern (19,16) aufweist, daß die Halteelemente (18) zueinander etwa parallel liegen und eine Reihe bilden, die parallel zum Verlauf des Hauptlichtwellenleiters (4) angeordnet ist und ein einzelnes Halteelement (18) beispielsweise als Materialabschnitt ausgebildet ist, in den eine Verbindung beider Fasern klemmend einsteckbar ist.

2. Vorrichtung nach Anspruch 1,
**dadurch gekennzeichnet, daß** der Hauptlichtwellenleiter (4) ein Versorgungskabel mit mehreren Bündeladern (9) ist, welche jeweils eine Vielzahl von Fasern (19) aufweisen,

3. Vorrichtung nach Anspruch 2,
**dadurch gekennzeichnet, daß** der Hauptlichtwellenleiter (4) ein strangförmiges Zentralelement aufweist, um das die Bündeladern (9) gewickelt sind, wobei die Schlagrichtung der Bündeladern (9) auf dem Zentralelement in Wendepunkten (10) periodisch wechselt.

4. Vorrichtung nach Anspruch 3,
**dadurch gekennzeichnet, daß** ihr Gehäuse (12) etwa im Bereich eines Wendepunktes (10) angeordnet ist.

5. Vorrichtung nach einem der vorhergehenden Ansprüche,
**dadurch gekennzeichnet, daß** das Gehäuse (12) einen Bauraum zur Aufnahme einer Vorratslänge (7') des Zweiglichtwellenleiters (8) hat.

6. Vorrichtung nach Anspruch 5,
**dadurch gekennzeichnet, daß** dem Bauraum Führungselemente zur Führung des Zweiglichtwellenleiters (8) ohne Unterschreiten des minimalen Biegeradius des Zweiglichtwellenleiters (8) zugeordnet sind.

7. Vorrichtung nach Anspruch 6,
**dadurch gekennzeichnet, daß** die Führungselemente durch Materialvorsprünge ausgebildet sind,

8. Vorrichtung nach einem der vorhergehenden Ansprüche,
**dadurch gekennzeichnet, daß** in der Halteeinrichtung (17) neben der Faser (19) des Hauptlichtwellenleiters (4) die zugeordnete Faser (16) des Zweiglichtwellenleiters (8) aufgenommen ist.

9. Vorrichtung nach einem der vorhergehenden Ansprüche,
**dadurch gekennzeichnet, daß** die Fasern (19, 16) von Hauptlichtwellenleiter (4) und Zweiglichtwellenleiter (8) miteinander verspleißt sind.

10. Vorrichtung nach einem der vorhergehenden Ansprüche,
**dadurch gekennzeichnet, daß** das Gehäuse (12) einen etwa spindelförmigen Horizontalschnitt aufweist, wobei dem oberen Rand seiner Seitenwände (13) nach innen vorstehende Vorsprünge (14) zugeordnet sind.

11. Vorrichtung nach Anspruch 10,
**dadurch gekennzeichnet, daß** das Gehäuse (12) als einseitig offene und mit einem Deckel verschließbare Schale ausgebildet ist.

## Claims

1. An apparatus for connecting at least one branch optical waveguide to a main optical waveguide,
wherein the apparatus comprises a housing (12) which is associated with the main optical waveguide (4) and into which the branch optical waveguide (8) opens, and at least one fibre (19) of the main optical waveguide (4) is connected inside the housing (12) to a fibre (16) of the branch optical waveguide (8) in a manner conducting light waves, **characterized in that** the fibre (19) of the main optical waveguide (4) to be connected is led to a holding device (17) without holding forward a spare length, the holding device (17) comprises a plurality of holding elements (18) for receiving the fibres (19, 16), the holding elements (18) are arranged substantially parallel to one another and form a row which is arranged parallel to the course of the main optical waveguide (4), and an individual holding element (18) is constructed for example in the form of a portion of the material into which a connexion of the two fibres is capable of being inserted in a clamped manner.

2. An apparatus according to Claim 1, **characterized in that** the main optical waveguide (4) is a supply cable with a plurality of multi-fibre buffer tubes (9) which comprise a plurality of fibres (19) in each case.

3. An apparatus according to Claim 2, **characterized in that** the main optical waveguide (4) has a central element in the form of a strand around which the multi-fibre buffer tubes (9) are wound, wherein the winding direction of the multi-fibre buffer tubes (9) on the central element is periodically changed at turning points (10).

4. An apparatus according to Claim 3, **characterized in that** its housing (12) is arranged substantially in the region of a turning point (10).

5. An apparatus according to any one of the preceding Claims, **characterized in that** the housing (12) has a structural space for receiving a spare length (7') of the branch optical waveguide (8).

6. An apparatus according to Claim 5, **characterized in that** the structural space has associated with it guide elements for guiding the branch optical waveguide (8) without falling below the minimum bending radius of the branch optical waveguide (8).

7. An apparatus according to Claim 6, **characterized in that** the guide elements are formed by projections of the material.

8. An apparatus according to any one of the preceding Claims, **characterized in that** the associated fibre (16) of the branch optical waveguide (8) is received in the holding device (17) adjacent to the fibre (19) of the main optical waveguide (4).

9. An apparatus according to any one of the preceding Claims, **characterized in that** the fibres (19, 16) of the main optical waveguide (4) and the branch optical waveguide (8) are spliced together.

10. An apparatus according to any one of the preceding Claims, **characterized in that** the housing (12) has a substantially spindle-shaped horizontal section, wherein inwardly directed projections (14) are associated with the upper edge of its lateral walls (13).

11. An apparatus according to Claim 10, **characterized in that** the housing (12) is constructed in the form of a shell which is open on one side and which is capable of being closed by a lid.

## Revendications

1. Dispositif pour connecter au moins un câble à fibres optiques de dérivation à un câble à fibres optiques principal,
ledit dispositif comportant un boîtier (12), qui est associé au câble à fibres optiques principal (4) et dans lequel débouche le câble à fibres optiques de dérivation (8), et, à l'intérieur du boîtier (12), au moins une fibre (19) du câble à fibres optiques principal (4) est reliée, pour transporter les ondes lumineuses, à une fibre (16) du câble à fibres optiques de dérivation (8), **caractérisé en ce que** les fibres (19) à relier du câble à fibres optiques principal (4) sont guidées sans tenir compte d'une longueur de réserve vers un dispositif de fixation (17), **en ce que** le dispositif de fixation (17) comporte plusieurs éléments de fixation (18) destinés à recevoir les fibres (19, 16), **en ce que** les éléments de fixation (18) sont disposés sensiblement parallèlement entre eux et forment une rangée qui est orientée parallèlement au tracé du câble à fibres optiques principal (4), et un seul élément de fixation (18) est réalisé sous la forme d'une partie dans laquelle peut être enfiché de manière bloquée un assemblage de deux fibres.

2. Dispositif selon la revendication 1,
**caractérisé en ce que** le câble à fibres optiques principal (4) est un câble d'alimentation avec plusieurs faisceaux de brins (9), qui comportent chacun une pluralité de fibres (19).

3. Dispositif selon la revendication 2,
**caractérisé en ce que** le câble à fibres optiques principal (4) comporte un élément central en forme de conducteur, autour duquel sont enroulés les faisceaux de brins (9), le sens d'enroulement des faisceaux de brins (9) sur l'élément central change périodiquement au niveau de points d'inversion (10)

4. Dispositif selon la revendication 3,
**caractérisé en ce que** le boîtier (12) est agencé sensiblement dans la zone d'un point d'inversion (10).

5. Dispositif selon l'une quelconque des revendications précédentes,
**caractérisé en ce que** le boîtier (12) comporte un espace destiné à recevoir une longueur de réserve (7') du câble à fibres optiques de dérivation (8).

6. Dispositif selon la revendication 5,
**caractérisé en ce qu'**à l'espace de réception sont associés des éléments de guidage, destinés à guider le câble à fibres optiques de dérivation (8) sans passer en dessous du rayon de flexion minimal du câble à fibres optiques de dérivation (8).

7. Dispositif selon la revendication 6,
**caractérisé en ce que** les éléments de guidage sont formés par des saillies du matériau.

8. Dispositif selon l'une quelconque des revendications précédentes,
**caractérisé en ce que** les fibres (16) associées du câble à fibres optiques de dérivation (8) sont reçues dans le dispositif de fixation (17) à côté des fibres (19) du câble à fibres optiques principal (4).

9. Dispositif selon l'une quelconque des revendications précédentes,
**caractérisé en ce que** les fibres (19, 16) du câble à fibres optiques principal (4) et du câble à fibres optiques de dérivation (8) sont épissées les unes aux autres.

10. Dispositif selon l'une quelconque des revendications précédentes,
**caractérisé en ce que** le boîtier (12) présente une coupe horizontale sensiblement en forme de fuseau, des saillies (14) s'avançant vers l'intérieur étant associées au bord supérieur de ses parois latérales (13).

11. Dispositif selon la revendication 10,
**caractérisé en ce que** le boîtier (12) est réalisé sous forme de coque ouverte sur un côté et pouvant être fermée par un couvercle.
